(19) **Europäisches Patentamt**
**European Patent Office**
**Office européen des brevets**

(11) **EP 4 429 250 A1**

(12) **EUROPEAN PATENT APPLICATION**
published in accordance with Art. 153(4) EPC

(43) Date of publication:
**11.09.2024 Bulletin 2024/37**

(21) Application number: **22890337.3**

(22) Date of filing: **02.11.2022**

(51) International Patent Classification (IPC):
$H04N\ 19/597^{(2014.01)}$    $H04N\ 19/177^{(2014.01)}$
$H04N\ 19/70^{(2014.01)}$    $H04N\ 19/96^{(2014.01)}$
$H04N\ 19/44^{(2014.01)}$    $H04N\ 19/184^{(2014.01)}$

(52) Cooperative Patent Classification (CPC):
H04N 19/177; H04N 19/184; H04N 19/44;
H04N 19/597; H04N 19/70; H04N 19/96

(86) International application number:
**PCT/KR2022/016952**

(87) International publication number:
**WO 2023/080606 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.11.2021 KR 20210149968**

(71) Applicant: **LG Electronics Inc.
Yeongdeungpo-gu
Seoul 07336 (KR)**

(72) Inventor: **HUR, Hyejung
Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **POINT CLOUD DATA TRANSMISSION DEVICE AND METHOD, AND POINT CLOUD DATA RECEPTION DEVICE AND METHOD**

(57) A point cloud data transmission method according to embodiments may comprise the steps of: encoding point cloud data; and transmitting a bitstream including the point cloud data. The point cloud data transmission method according to the embodiments may comprise the steps of: receiving a bitstream including point cloud data; and decoding the point cloud data.

FIG. 1

## Description

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

To achieve these objects and other advantages and in accordance with the purpose of the disclosure, as embodied and broadly described herein, a method of transmitting point cloud data may include encoding point cloud data, and transmitting a bitstream containing the point cloud data. In another aspect of the present disclosure, a method of receiving point cloud data may include receiving a bitstream containing point cloud data, and decoding the point cloud data.

[Advantageous Effects]

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;
FIG. 5 shows an example of voxels according to embodiments;
FIG. 6 shows an example of an octree and occupancy code according to embodiments;
FIG. 7 shows an example of a neighbor node pattern according to embodiments;
FIG. 8 illustrates an example of point configuration in each LOD according to embodiments;
FIG. 9 illustrates an example of point configuration in each LOD according to embodiments;
FIG. 10 illustrates a point cloud decoder according to embodiments;

FIG. 11 illustrates a point cloud decoder according to embodiments;

FIG. 12 illustrates a transmission device according to embodiments;

FIG. 13 illustrates a reception device according to embodiments;

FIG. 14 illustrates an exemplary structure operable in connection with point cloud data transmission/reception methods/devices according to embodiments;

FIG. 15 illustrates an example of grouping according to a material ID according to embodiments;

FIG. 16 illustrates an example of grouping for each similar attribute in an octree structure according to embodiments;

FIG. 17 illustrates an example of a method of searching for a neighbor point set according to embodiments;

FIG. 18 illustrates a point cloud data transmission device according to embodiments;

FIG. 19 illustrates a point cloud data reception device according to embodiments;

FIG. 20 illustrates a bitstream including point cloud data and/or parameters according to embodiments;

FIG. 21 shows a syntax of a sequence parameter set according to embodiments;

FIG. 22 shows a syntax of an attribute parameter set according to embodiments;

FIG. 23 shows a syntax of a tile parameter set according to embodiments;

FIG. 24 shows a syntax of an attribute data header according to embodiments;

FIG. 25 illustrates a method of transmitting point cloud data according to embodiments; and

FIG. 26 illustrates a method of receiving point cloud data according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

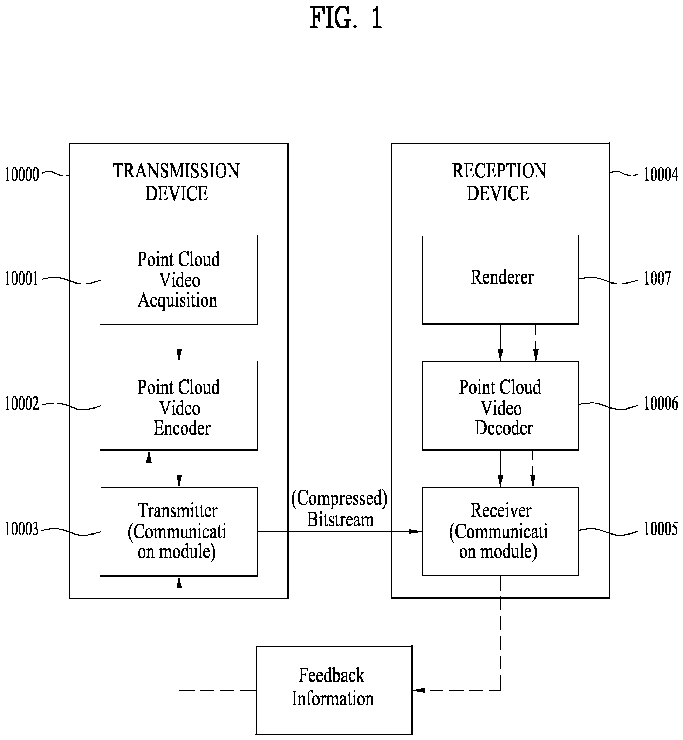

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process to the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

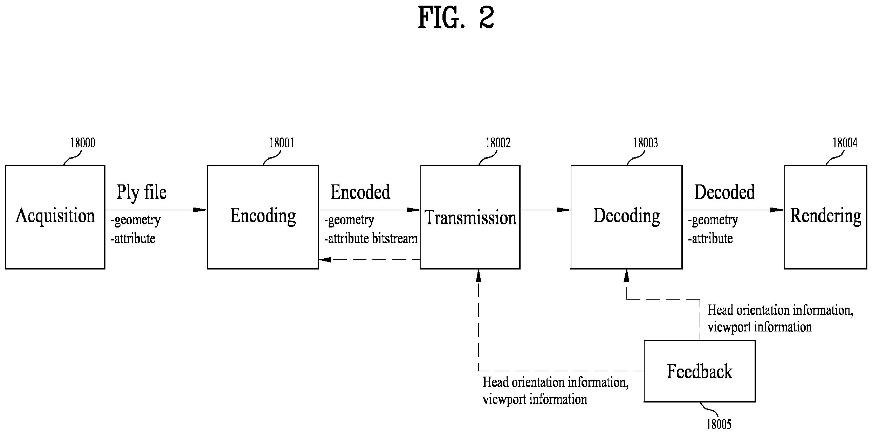

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

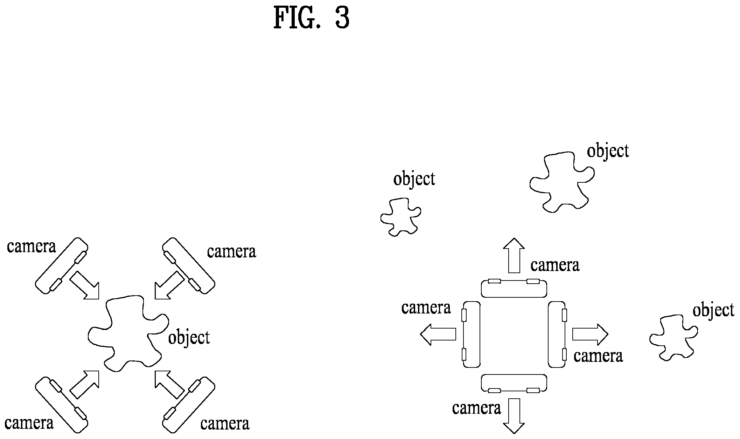

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (e.g., a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

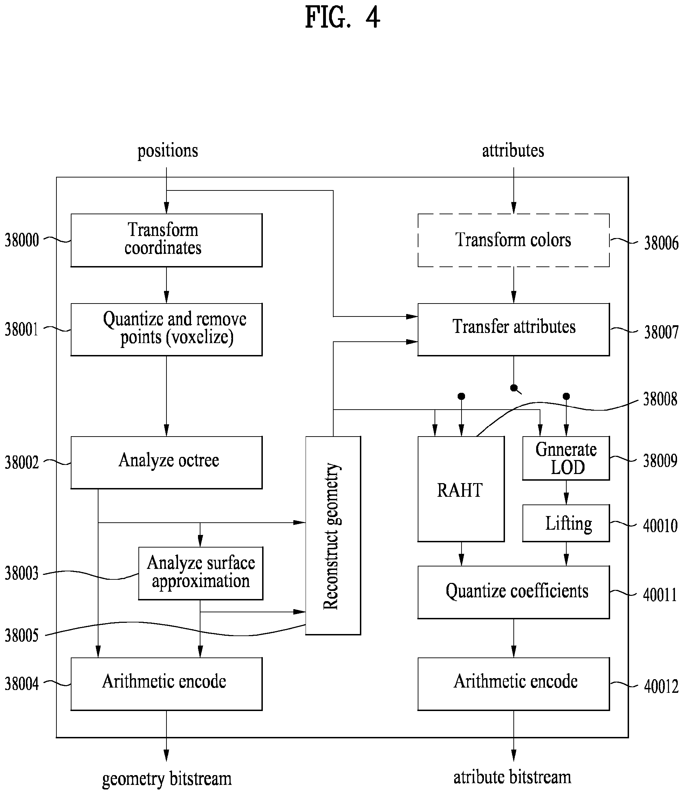

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometry reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (e.g., a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) may be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing apparatus, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

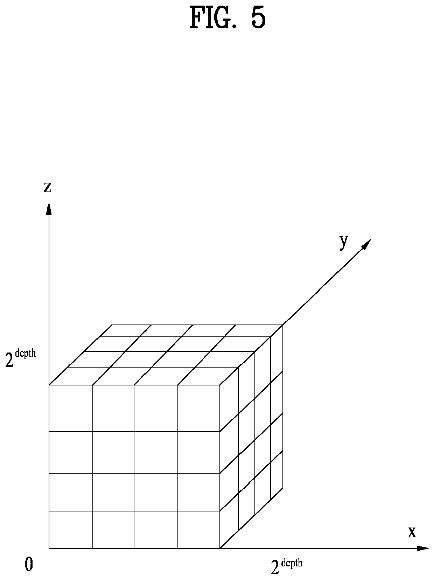

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud encoder (e.g.,

the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

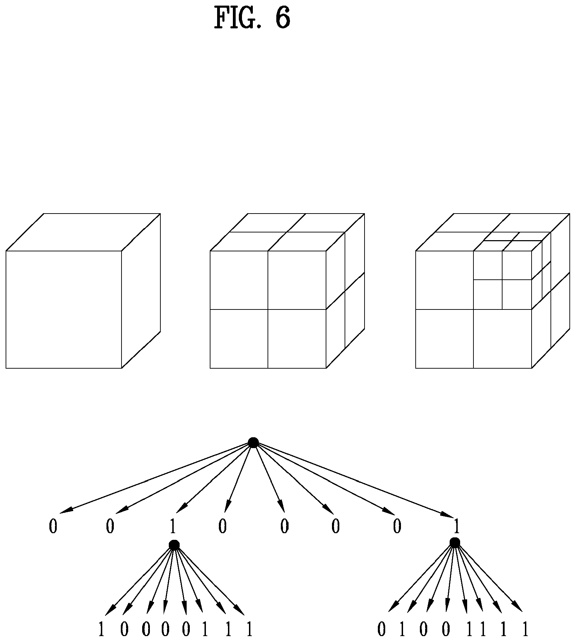

FIG. 6 shows an example of an octree and occupancy code according to embodiments.

As described with reference to FIGS. 1 to 4, the point cloud content providing system (point cloud video encoder 10002) or the point cloud encoder (e.g., the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and (2d, 2d, 2d). Here, 2d may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$\text{d} = Ceil\left(Log2\left(Max\left(x^{int}_n, y^{int}_n, z^{int}_n, n = 1, ..., N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 40004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (e.g., the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{i)} \quad \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix};$$

$$\text{ii)} \quad \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix};$$

$$\text{iii)} \quad \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABLE 2-1 Triangles formed from vertices ordered 1,...,n

| n | triangles |
|---|---|

(continued)

| | |
|---|---|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

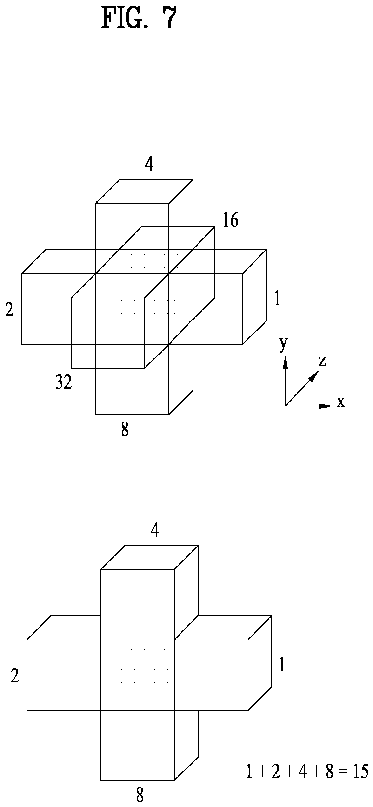

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (e.g., the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using 23 = 8 methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The upper part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The lower part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

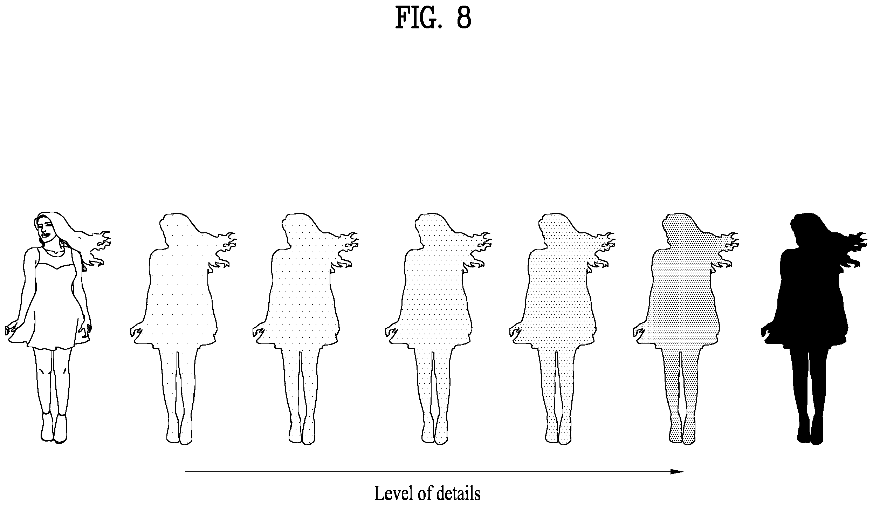

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 40009) may classify (reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

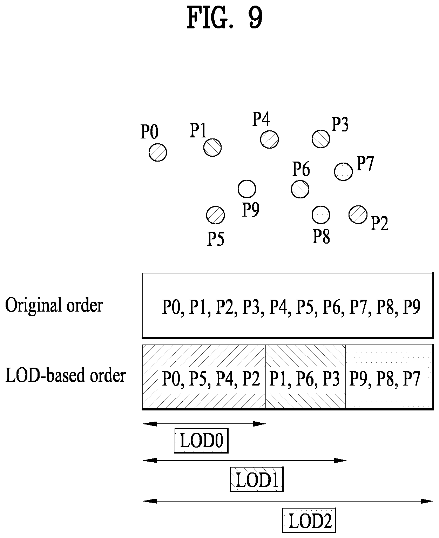

FIG. 9 illustrates an example of point configuration for each LOD according to embodiments.

As described with reference to FIGS. 1 to 8, the point cloud content providing system, or the point cloud encoder (e.g., the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LODO contains P0, P5, P4 and P2. LOD1 contains the points of LODO, P1, P6 and P3. LOD2 contains the points of LODO, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 40011) may quantize and inversely quantize the residuals (which may be called residual attributes, residual attribute values, or attribute prediction residuals) obtained by subtracting a predicted attribute (attribute value) from the attribute (attribute value) of each point. The quantization process is configured as shown in the following table.

```
TABLE Attribute prediction residuals quantization pseudo code
int PCCQuantization(int value, int quantStep) {
if( value >=0) {
return floor(value / quantStep + 1.0 / 3.0);
} else {
return -floor(-value / quantStep + 1.0 / 3.0);
}
}
```

```
TABLE Attribute prediction residuals inverse quantization pseudo code
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (e.g., the arithmetic encoder 40012) may perform entropy coding on the attributes of the corresponding point without performing the above-described operation.

The point cloud encoder according to the embodiments (e.g., the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (e.g., the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l\,x,y,z}$ denotes the average attribute value of voxels at level $l$. $g_{l\,x,y,z}$ may be calculated based on $g_{l+1\,2x,y,z}$ and $g_{l+1\,2x+1,y,z}$. The weights for $g_{l\,2x,y,z}$ and $g_{l\,2x+1,y,z}$ are $w1 = w_{l\,2x,y,z}$ and $w2 = w_{l\,2x+1,y,z}$.

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\,x,y,z}$ is a low-pass value and is used in the merging process at the next higher level. $h_{l-1\,x,y,z}$ denotes high-pass coefficients. The high-pass coefficients at each step are quantized and subjected to entropy coding (e.g., encoding by the arithmetic encoder 400012). The weights are calculated as $w_{l-1\,x,y,z} = w_{l\,2x,y,z} + w_{l\,2x+,y,z}$. The root node is created through the $g_{1\,0,0,0}$ and $g_{1\,0,0,1}$ as follows.

$$\begin{bmatrix} gDC \\ h_{0_{0,0,0}} \end{bmatrix} = T_{w1000\,w1001} \begin{bmatrix} g_{1\,0,0,0z} \\ g_{1_{0,0,1}} \end{bmatrix}$$

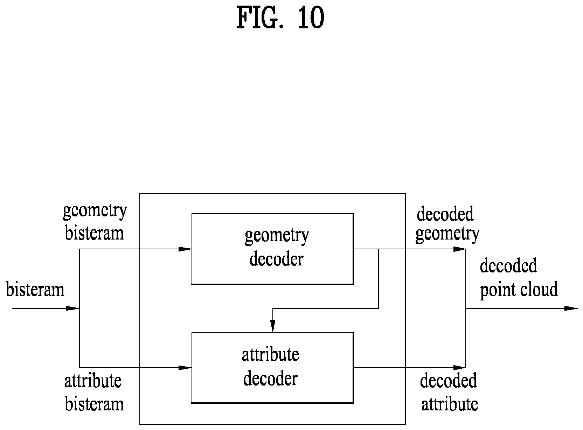

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

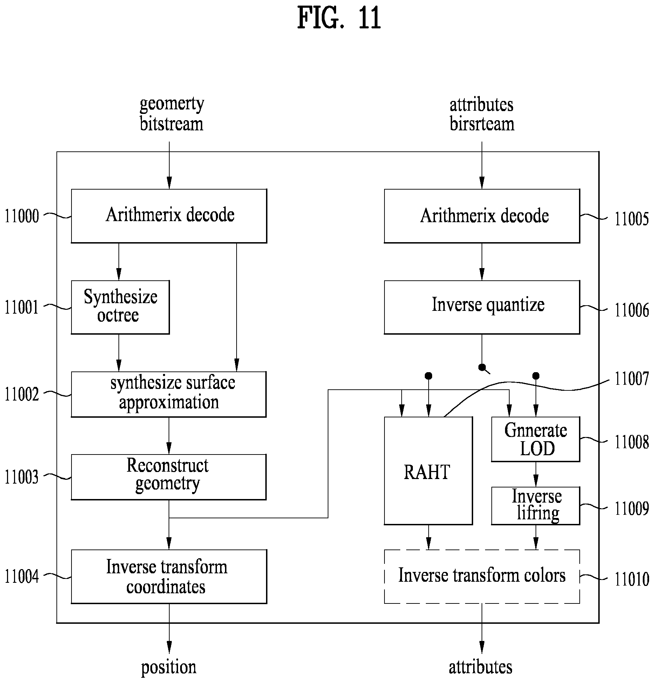

FIG. 11 illustrates a point cloud decoder according to embodiments.

The point cloud decoder illustrated in FIG. 11 is an example of the point cloud decoder illustrated in FIG. 10, and may perform a decoding operation, which is a reverse process to the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct coding and trisoup geometry decoding. The direct coding and trisoup geometry decoding are selectively applied. The geometry decoding is not limited to the above-described example, and is performed as a reverse process to the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

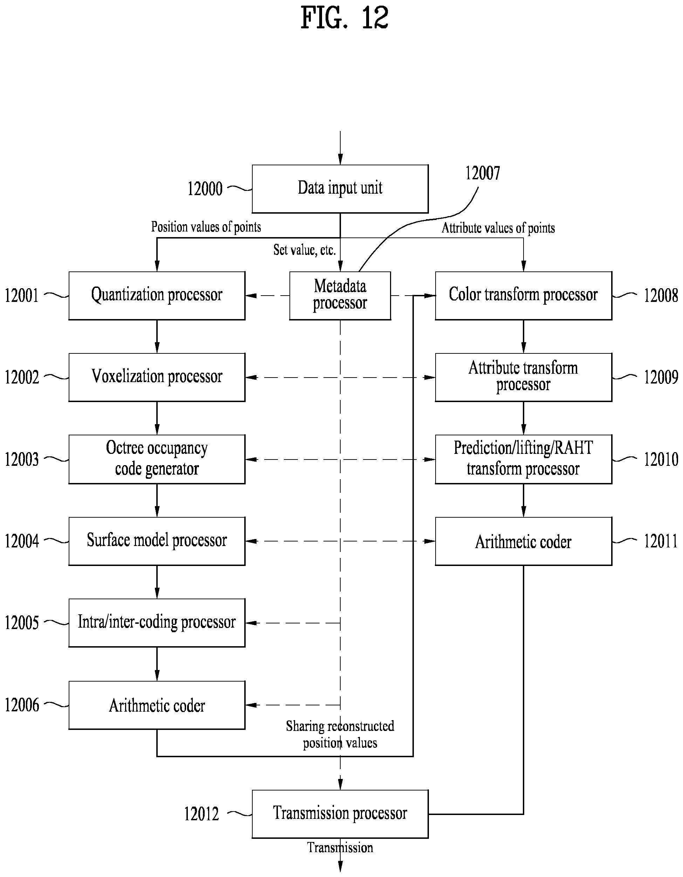

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 120002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud encoder (e.g., the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. A detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. A detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom0° and one or more attribute bitstreams Attr0° and Attr1$^0$.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

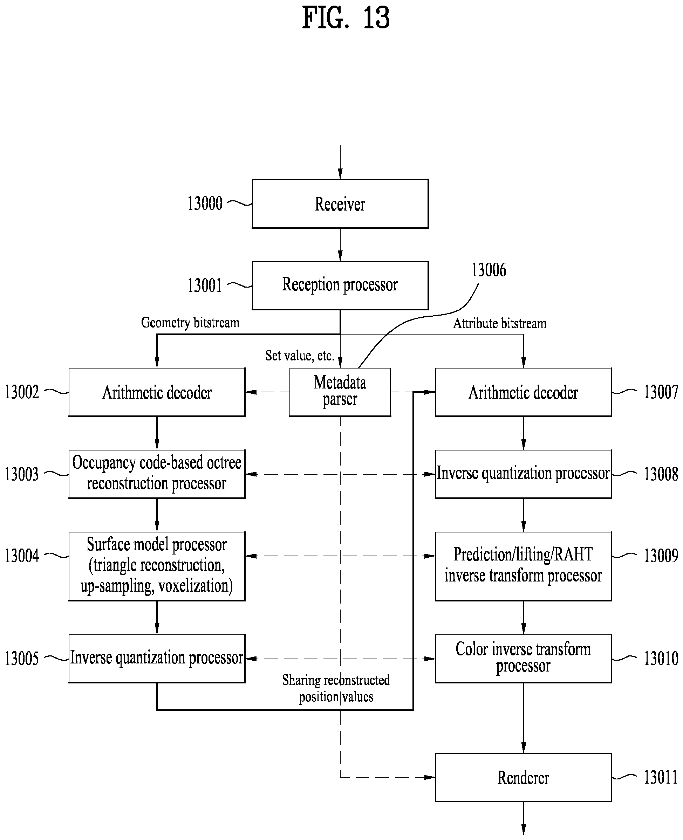

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment may include a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform a reverse process to the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. A detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 13005 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (e.g., triangle reconstruction, up-sampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

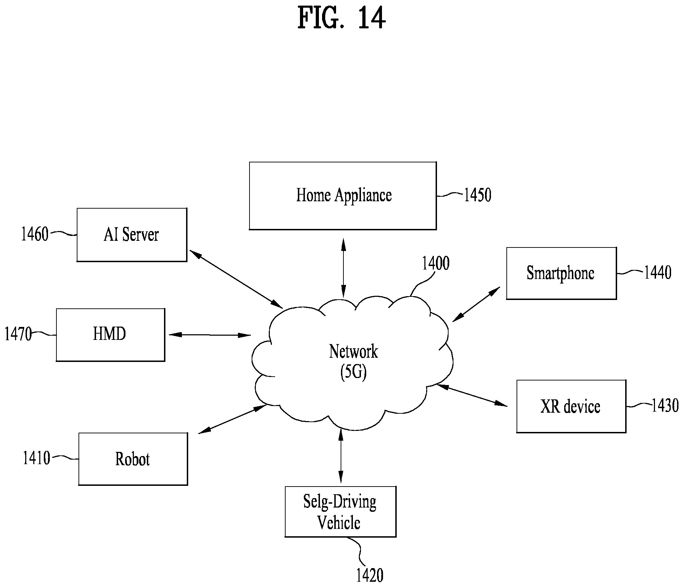

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission/reception device according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<PCC+XR+Mobile phone>

The XR/PCC device 1430 may be implemented as a mobile phone 1440 by applying PCC technology.

The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.

The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.

The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

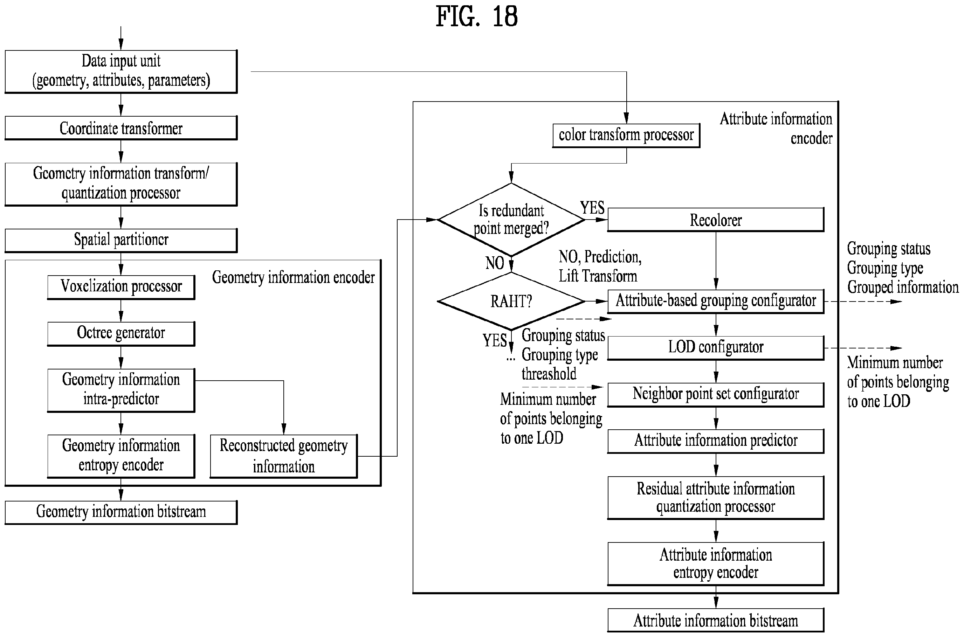

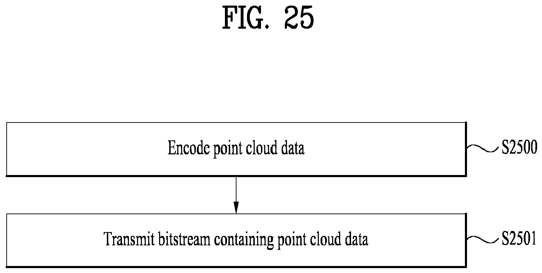

The point cloud data transmission method/device according to embodiments is construed as a term referring to the transmission device 10000, point cloud video encoder 10002, and transmitter 10003 of FIG. 1, the acquisition 20000/encoding 20001/transmission 20002 of FIG. 2, the encoder of FIG. 4, the transmission device of FIG. 12, the device of FIG. 14, the encoder of FIG. 18, the transmission method of FIG. 25, and the like.

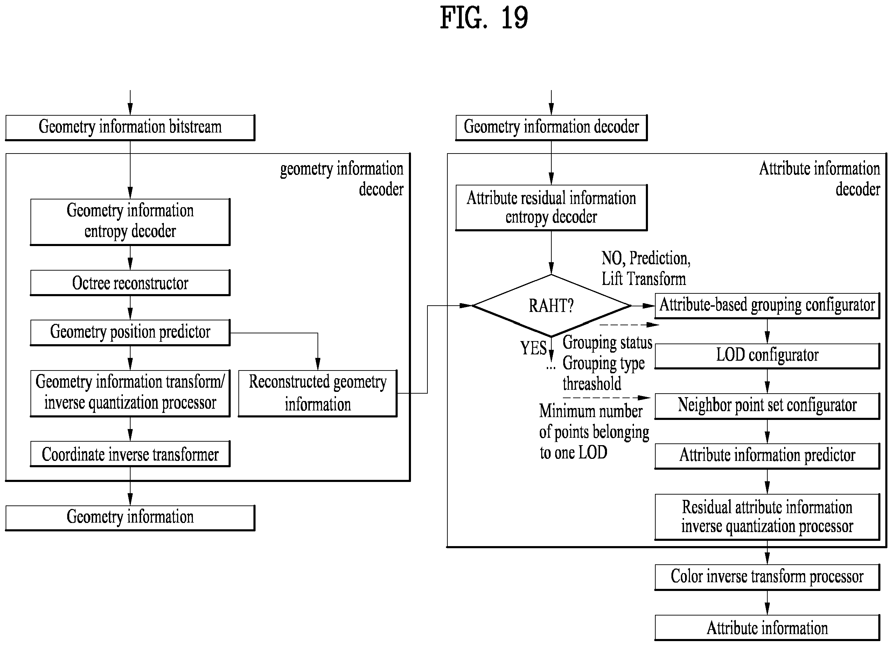

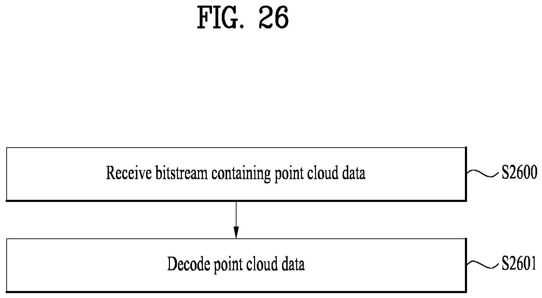

The point cloud data reception method/device according to embodiments is construed as a term referring to the reception device 10004, receiver 10005, and point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoder of FIG. 19, the reception method of FIG. 26, and the like.

The point cloud data transmission/reception method/device according to the embodiments may be referred to as a method/device according to the embodiments.

According to embodiments, geometry data, geometry information, position information, and the like constituting the point cloud data are construed as having the same meaning. Attribute data, attribute information, and the like constituting point cloud data are construed as having the same meaning.

A method/device according to embodiments may include an attribute compression method by grouping points with similar attributes.

Embodiments relate to methods for increasing compression efficiency of attributes of geometry-based point cloud compression (G-PCC) for compressing three-dimensional point cloud data.

Embodiments are intended to increase attribute compression efficiency through a method of selecting a neighbor point set used for prediction in consideration of attribute association between points of content.

Methods/devices according to embodiments may include a similar attribute-based grouping method, a method of configuring an LOD and selecting a neighbor point set for each group, and a signaling method for supporting the methods above.

Embodiments relate to methods for increasing compression efficiency of attributes of geometry-based point cloud compression (G-PCC) for compressing three-dimensional point cloud data.

A point cloud is composed of a set of points, and each of the points may have geometry information and attribute information. The geometry information is three-dimensional position (XYZ) information, and the attribute information is values of colors (RGB, YUV, etc.) and/or reflectance. The G-PCC encoding process may include compressing the geometry and compressing the attribute information based on the geometry reconstructed with position information changed through compression (reconstructed geometry = decoded geometry). The G-PCC decoding process may include receiving an encoded geometry bitstream and attribute bitstream, decoding geometry, and decoding attribute information based on the geometry reconstructed through the decoding.

In the attribute information compression process, prediction transform, lifting transform, or RAHT is used as a technique.

In the prediction transform and the lifting transform, points may be grouped by dividing the same into Levels of Detail (hereinafter referred to as LOD).

This operation is referred to as LOD generation. Hereinafter, a group having different LODs may be referred to as a LOD set.

Here, L represents LOD and is an integer starting from 0. LODO is a set composed of points having the longest distances therebetween. As I increases, the distance between points in LOD1 decreases. (see FIG. 8). There may be only one LOD. In this case, points may be arranged sorted in Morton order in one LOD. As shown in FIG. 8, point cloud data may be rendered based on the LOD.

After an LOD set is generated, the X (>0) nearest neighbor neighbors may be searched for in a group having the same or lower LOD (a group in which the distance between nodes is large) 2) based on the LOD set and registered in the predictor as a neighbor point set. X is the maximum number of points that may be configured as neighbors. X may be input as a user parameter.

As shown in FIG. 9, neighbors of P3 belonging to LOD1 are searched for in LODO and LOD1. The three nearest neighbor nodes may be P2, P4, and P6. These three nodes are registered in the predictor of P3 as a neighbor point set. When there are only one LOD, the three nearest neighbor nodes may be selected from among the points that are positioned before the current point in order in the same LOD.

Every point may have one predictor. Attributes are predicted from the neighbors registered in the predictor.

The predictor may predict an attribute through a neighbor point set. The residual between the attribute value of a point and the attribute value predicted by the predictor of the point may be encoded and signaled to the receiver.

Embodiments include an attribute compression method considering attribute association between points of content.

A method of configuring a neighbor point set according to embodiments is changed. The neighbor point set configuration method may be applied to both a transmitter and a receiver.

Embodiments may increase attribute compression efficiency through a method of efficiently changing a configuration to obtain a neighbor point set from a set of points having similar attributes when a neighbor point set of points is configured.

It is Changes and combinations of the embodiments are possible. Terms used in the present disclosure may be understood based on the intended meaning of the terms within the scope of common uses thereof in the relevant field.

Embodiments propose a method for limiting the sets of points that may be selected as neighbor sets by grouping the sets of points that may be selected based on attribute association between points in the content.

The neighbor point set generation according to the embodiments is performed in both PCC encoding/decoding of the PCC encoder/decoder.

The method/device according to embodiments may include and perform the following operations:
Grouping according to similar attribute (S1500), LOD generation for each group (S1501), and LOD-based neighbor point set generation for each group (S1502). Hereinafter, each operation will be described with reference to each drawing.

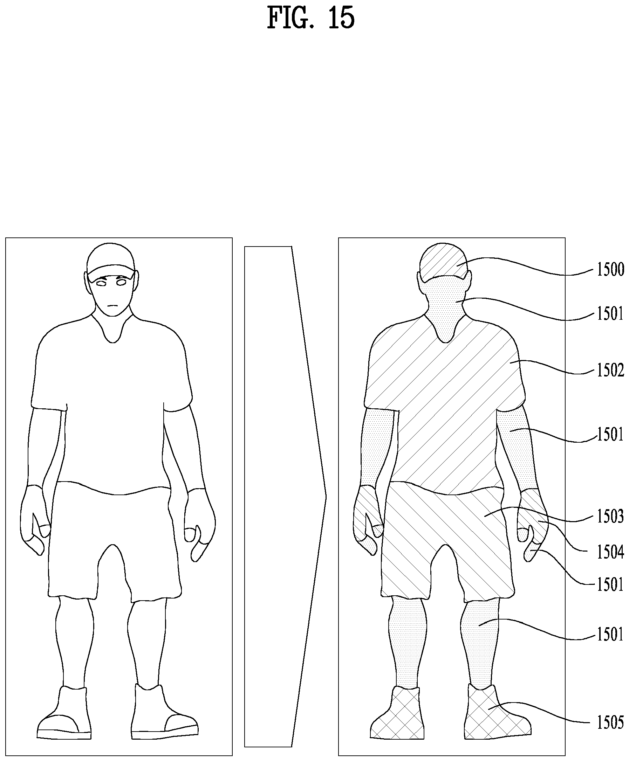

FIG. 15 illustrates an example of grouping according to a material ID according to embodiments.

The point cloud data transmission method/device according to the embodiments (i.e., the transmission device 10000, point cloud video encoder 10002, and transmitter 10003 of FIG. 1, the acquisition 20000-encoding 20001-transmission 20002 of FIG. 2, the encoder of FIG. 4, the transmission device of FIG. 12, the device of FIG. 14, the encoder of FIG. 18, the transmission method of FIG. 25, etc.) may group point cloud data as shown in FIG. 15.

The point cloud data reception method/device according to the embodiments (i.e., the reception device 10004, receiver 10005, and point cloud video decoder 10006 of FIG. 1, the transmission 20002-decoding 20003-renderign 20004 of FIG. 2, the decoder in FIGS. 10 and 11, the reception device of FIG. 13, the device of FIG. 14, the decoder of FIG. 19, the reception method of FIG. 26, etc.) may group point cloud data as shown in FIG. 15.

The methods/devices according to the embodiments may group point cloud data according to similar attributes before generating LODs.

According to embodiments, the grouping may be performed based on a material ID (grouping according to the material ID).

When the material ID is present in the attribute information (attribute data) about the point cloud, the point cloud may be grouped by the material ID.

Whether grouping by the material ID is performed may be signaled to the decoder. The decoder may generate the same grouping. The grouping shown in the present embodiment may be extended onto a scene graph.

For example, referring to FIG. 15, the point cloud data may include various materials, such as a cap 1500, a face, a forearm, an ankle 1501, a shirt 1502, pants 1503, a wrist 1504, and a shoe 1505. The methods/devices according to embodiments may identify materials based on an ID. Based on skin color, the face, forearms, and ankles 1501 may have the same color. The cap, shirt, pants, and shoes may have different colors. Materials that have the same color may have the same material ID. For example, the material ID of the cap 1500 may be 1, the material ID of the face, forearms, and ankles 1501 may be 2, and the material ID of the shirt 1502 may be 3. The material ID may be represented by an integer or other value. The methods/devices according to the embodiments may classify point cloud data having the same material ID into the same group. Since the grouped point cloud data have the same/similar attributes, the grouping may be efficiently utilized for attribute compression to compress the data.

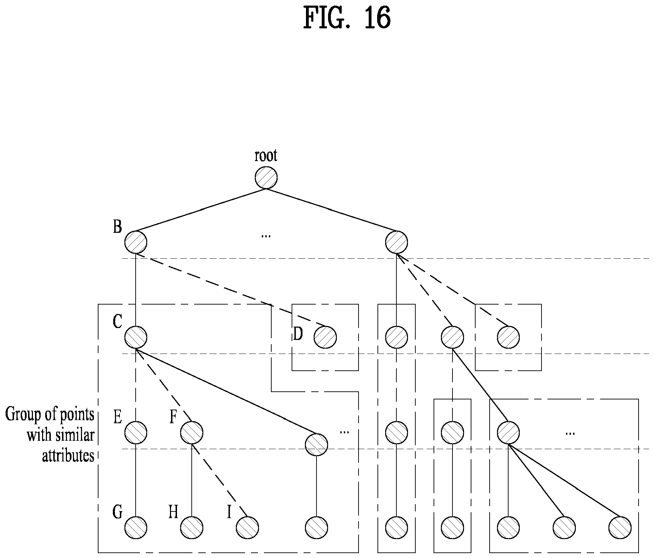

FIG. 16 illustrates an example of grouping for each similar attribute in an octree structure according to embodiments.

The point cloud data transmission method/device according to the embodiments (i.e., the transmission device 10000, point cloud video encoder 10002, and transmitter 10003 of FIG. 1, the acquisition 20000-encoding 20001-transmission 20002 of FIG. 2, the encoder of FIG. 4, the transmission device of FIG. 12, the device of FIG. 14, the encoder of FIG. 18, the transmission method of FIG. 25, etc.) may group point cloud data as shown in FIG.16.

The point cloud data reception method/device according to the embodiments (i.e., the reception device 10004, receiver 10005, and point cloud video decoder 10006 of FIG. 1, the transmission 20002-decoding 20003-renderign 20004 of FIG. 2, the decoder in FIGS. 10 and 11, the reception device of FIG. 13, the device of FIG. 14, the decoder of FIG. 19, the reception method of FIG. 26, etc.) may group point cloud data as shown in FIG. 16.

When the method/device according to embodiments uses an octree such as FIG. 16, the point cloud data may be grouped by similar attributes in the octree structure.

Grouping by similar attributes may be performed in the octree structure. In the geometry compression process, the octree may be configured. The grouping method may be configured as follows.

Attribute similarity between nodes may be checked in a breath-first traverse order from the root node (S1600).

The median value and the min/max value of the attributes of the points belonging to each octree node the may be obtained (S1601).

When the difference between the median value and the min/max value is greater than a specific threshold, it may be checked whether the child nodes of the node are grouped.

When the difference between the median value and the min/max value is less than the specific threshold, the node may be set as one group (S1603).

Operations S1601 to S1602 may be repeatedly performed up to a level before the leaf node (S1604).

Whether to perform grouping by octree nodes may be signaled to the decoder. The decoder may generate the same grouping. The grouping shown in this embodiment may be extended to a scene graph. The threshold may be input as an encoder option.

Referring to FIG. 16, one or more nodes may be grouped starting from the root node. To group nodes with similar attributes, one or more nodes including points with attributes the difference of which is within a specific threshold may be generated as one group. The nodes having attributes the difference of which is large may be specified as separate groups, and the nodes having attributes the difference of which is small may be specified as one group.

A method/device according to embodiments may generate an LOD for each group.

Groups according to similar attributes may be generated, and LOD may be generated for each group. Points of the point cloud are changed to a Morton code based on x, y, and z position values. Points are sorted based on the Morton code values. An LOD may be generated based on the sorted points, and points in the LODI set may be sorted based on Morton order.

The maximum number of LODs (=I) may be input as an encoder option and may be signaled to the decoder.

When the number of points belonging to each group is less than or equal to N, they may be treated as one LOD without performing the LOD generation. N may be input as an encoder option and signaled to the decoder.

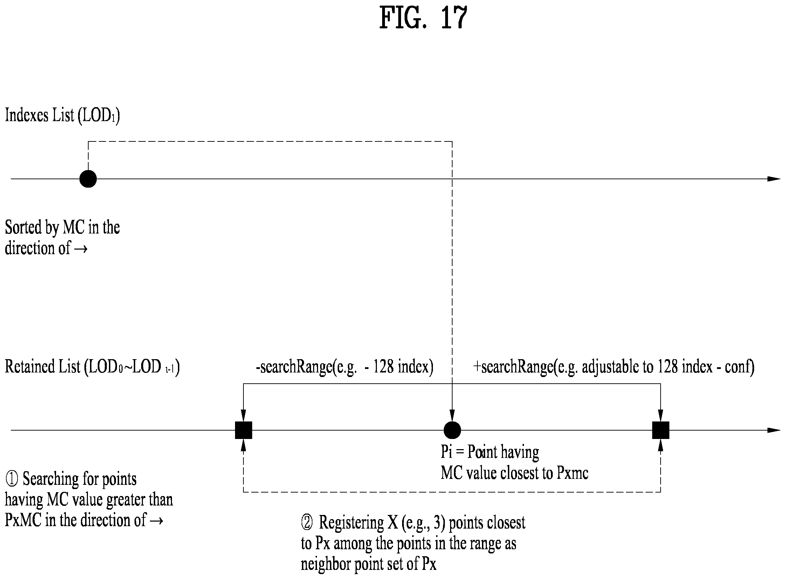

FIG. 17 illustrates an example of a method of searching for a neighbor point set according to embodiments.

The point cloud data transmission method/device according to the embodiments (i.e., the transmission device 10000, point cloud video encoder 10002, and transmitter 10003 of FIG. 1, the acquisition 20000-encoding 20001-transmission 20002 of FIG. 2, the encoder of FIG. 4, the transmission device of FIG. 12, the device of FIG. 14, the encoder of FIG. 18, the transmission method of FIG. 25, etc.) may search for a neighbor point for compressing the point cloud data as shown in FIG. 17.

The point cloud data reception method/device according to the embodiments (i.e., the reception device 10004, receiver 10005, and point cloud video decoder 10006 of FIG. 1, the transmission 20002-decoding 20003-renderign 20004 of FIG. 2, the decoder in FIGS. 10 and 11, the reception device of FIG. 13, the device of FIG. 14, the decoder of FIG. 19, the reception method of FIG. 26, etc.) may search for a neighbor point for reconstructing the point cloud data as shown in FIG. 17.

The methods/devices according to the embodiments may generate a neighbor point set based on the LOD for each group.

When a neighbor point or the nearest neighbor (NN) is searched for based on a distance, the difference in attribute may be large as shown in FIG. 15. In other words, embodiments may provide accurate and high-performance compression/restoration because data with similar attributes are actually grouped together to generate LODs and a neighbor point set.

A LODI set may be generated for each group and a neighbor point set for the predictor may be generated based on the generated set LODI, LODO to LOD-i-1.

The neighbor point set generation may be performed for each group. In generating a neighbor point set for point Px belonging to the set LODI in each group, the points belonging to sets LODO to LODI-1 and preceding points in order (or points having a Morton code less than or equal to the Morton code of Px) among the points belonging to the set LODI may be searched for a neighbor point set.

In generating a neighbor point set for point Px belonging to the set LODI, points having the closest Morton code may be searched for among the points belonging to sets LODO to LODI-1 and preceding points in order among the points belonging to the set LODI. When there is one LOD, a neighbor point search range may be determined based on the position of the current point in the list sorted based on the Morton code.

The nearest points may be registered as neighbor points as many as the maximum number of neighbor points by comparing the distances from Px to as many points around the selected point as searchRange, which is the neighbor point search range number. When the number of LODs is 1, as many nearest points as the maximum number of neighbor points may be registered as neighbor points by comparing the distances between Px and the points whose number corresponds to the searchRange and which are in front of the position of the current point.

In generating a neighbor point set for point Px belonging to the set LODI, the distance from the points in the neighbor point search range to Px are calculated to search for the nearest neighbor points and register the same as neighbors of Px. The neighbor points may be registered as many as the maximum number of neighbor points. The default is 3, and up to three neighbor points may be searched for.

Depending on the object from which the content is captured, the manner in which the content is captured, and the equipment used, the attribute characteristics of the content may vary. Considering the attributes of the content, a grouping method may be provided to increase the likelihood that the attributes of points selected as neighbors are similar to each other. This may reduce the size of the attribute bitstream and thus increase compression efficiency.

The operations of the above-described embodiments have been described by way of example. The operations of the embodiments are not to be construed as limited by the terminology and/or order in the examples, but are intended to include changes/variations within the scope of the embodiments.

Referring to FIG. 17, the current point P that is the current target of encoding (or decoding) is encoded/decoded according to the Morton order. Based on the index of the LOD to which the current point P belongs, the most similar neighbor points to the current point P are found among the points belonging to LODs with indices less than or equal to the index of the LOD. Because the points are sorted in Morton code order, points with a Morton code less than or equal to the Morton code of the current point P may be found in front of the position of the current point P. To this end, a neighbor point search range may be set. The search range may be configured differently. The search range may be used according to the set values, and may be provided to the decoder as parameter information. Among the points in the search range, the three points closest to the current point may be set as a neighbor point set for the current point. The number of points set as the neighbor set may be varied.

FIG. 18 illustrates a point cloud data transmission device according to embodiments.

The point cloud data transmission method/device according to the embodiments (i.e., the transmission device 10000, point cloud video encoder 10002, and transmitter 10003 of FIG. 1, the acquisition 20000-encoding 20001-transmission 20002 of FIG. 2, the encoder of FIG. 4, the transmission device of FIG. 12, the device of FIG. 14, the transmission method of FIG. 25, etc.) may correspond to FIG. 18. Each component of FIG. 18 may correspond to hardware, a processor, software, and/or a combination thereof. For example, the transmission device may be referred to as an encoder. The transmission device may include a memory and/or a processor.

The block diagram of a PCC data encoder is described below with reference to FIG. 18.

An encoder or an encoding device is referred to as an encoder, and a decoder or a decoding device is referred to as a decoder. PCC data may be input to the encoder and encoded, and then a geometry information bitstream and an attribute information bitstream may be output. The attribute information encoder according to embodiments is configured as follows. A neighbor point set configurator may perform the operations of the above-described embodiments.

An attribute-based grouping configurator may perform grouping according to attributes (see FIG. 15, etc.). Whether to perform grouping may be received as input. When the grouping is desired, it may be performed. Also, a grouping type may be received to perform grouping according to a material ID or to perform grouping by similar attributes in an octree structure. Whether to perform grouping and the grouping type may be transmitted to the decoder, and the corresponding grouping information may be restored to restore the group. The attribute-based grouping configurator may transmit the grouping result to the decoder.

An LOD configurator may configure an LOD for each group (see FIGS. 15 and 16). When the number of points in a group is small based on the minimum number of points belonging to one LOD, only one LOD may be configured.

The neighbor point set configurator may configure a neighbor point set that is at a close distance to the point for attribute prediction based on the LOD generated for each group (see the description of FIG. 17, etc.). The maximum number of neighbor points per point may be set as a user encoding option and the default may be 3.

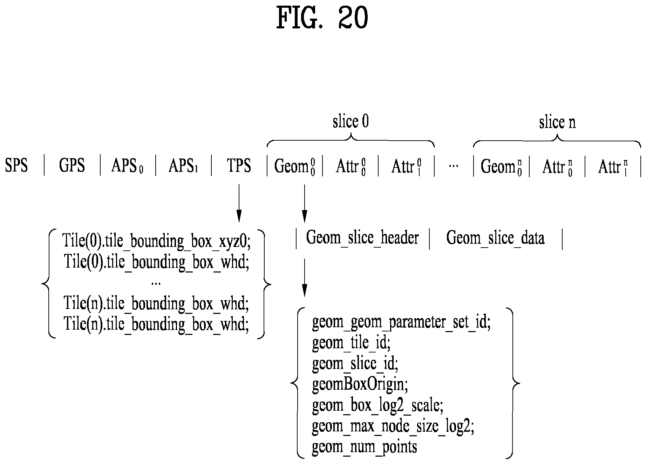

Referring to FIG. 18, a data input unit may acquire point cloud data containing geometry and/or an attribute. Configuration information required for encoding may be acquired as a parameter. The coordinate transformer may transform the coordinates of the points into a coordinate system suitable for encoding. A geometry information transform quantization processor may quantize the geometry (point) based on a quantization parameter. A spatial partitioner may partition a space including points to process the geometry. The geometry information encoder may voxelize the geometry through a voxelization processor. An octree generator may present points in an octree structure. The point cloud data may be encoded based on the generated octree. An octree is a tree structure having up to 8 sub-nodes (child nodes). The octree may include not only the (oc-)tree but also a tree having a different number of child nodes. A geometry information predictor may generate a predicted value for the current geometry based on the (oc-)tree. By encoding only the residual value between the value of the current geometry and the predicted value of the geometry, the size of the bitstream may be effectively reduced. A geometry information entropy encoder may encode the geometry based on an entropy method. The encoded geometry is included in the bitstream (see FIG. 20). In order to encode attribute information, the geometry information encoder may reconstruct the encoded geometry. The reconstructed geometry information is transmitted to the attribute information encoder.

The attribute information encoder may convert a color, which is one of attributes, into a color representation suitable for encoding through a color transform processor. When a redundant point is merged among the points included in the node, recoloring may be performed. That is, the point may be recolored. The attribute information encoder may encode the attribute based on RAHT, lift transform, or prediction. The attribute information encoder may group points according to the attributes of the points. The grouping configurator may perform grouping according to information indicating whether to perform grouping, information indicating a grouping type, and information indicating a threshold. The information related to the applied grouping (the information indicating whether to perform grouping, the information indicating the grouping type, the information indicating the threshold, etc.) may be generated as parameters, included in the bitstream, and transmitted to the decoder (see FIG. 20, etc.). The LOD configurator may generate an LOD including point cloud data. The LOD configurator may generate an LOD according to a setting of the minimum number of points included in one LOD. Information indicating the minimum number of points included in one LOD may be generated as a parameter, included in the bitstream, and transmitted to the decoder (see FIG. 20, etc.). A neighbor point set configurator may generate a neighbor point set as a candidate for finding a point similar to the current point. The attribute information predictor may use a point most similar to the current point from the neighbor point set as a predictor. A residual between the attribute value of the current point and the attribute value of the predictor may be encoded, thereby effectively reducing the size of the bitstream. A residual attribute information quantization processor may quantize the attribute information based on a quantization parameter. An attribute information entropy encoder may encode the attribute information based on the entropy method. The encoded attribute information may be included in the bitstream and transmitted (see FIG. 20, etc.).

The encoding operation of the transmission device of FIG. 18 follows the description of the drawings given above.

FIG. 19 illustrates a point cloud data reception device according to embodiments.

The point cloud data reception method/device according to the embodiments (i.e., the reception device 10004, receiver 10005, and point cloud video decoder 10006 of FIG. 1, the transmission 20002-decoding 20003-renderign 20004 of FIG. 2, the decoder in FIGS. 10 and 11, the reception device of FIG. 13, the device of FIG. 14, the reception method of FIG. 26, etc.) may correspond to FIG. 19. Each component of FIG. 19 may correspond to hardware, a processor, software, and/or a combination thereof. For example, the reception device may be referred to as a decoder. The reception device may include a memory and/or a processor. The reception device of FIG. 19 may perform a corresponding process and a reverse process to the transmission device of FIG. 18.

The block diagram of a PCC data decoder is described below with reference to FIG. 19. The encoded geometry information bitstream and the attribute information bitstream may be provided to the decoder as input and decoded to output reconstructed PCC data. The attribute information decoder of the decoder according to the embodiments is configured as follows. A neighbor point set configurator may perform the operation of the described embodiments.

An attribute-based grouping configurator may generate groups by decoding information indicating whether to perform grouping, information indicating a grouping type, and grouped information transmitted from the encoder.

An LOD configurator may configure an LOD for each group. The minimum number of points belonging to one LOD transmitted from the encoder may be decoded. When the number of points in the group is small based on the minimum number, only one LOD may be configured.

A neighbor point set configurator may be a module that performs the same function/operation as the neighbor point set configurator of the encoder and may be the same as the neighbor point set configurator of the encoder.

Referring to FIG. 19, a geometry information decoder may receive a geometry information bitstream (see FIG. 20). A geometry information entropy decoder may decode the geometry information based on the entropy method. An octree reconstructor may reconstruct the (oc)tree applied by the encoder. Based on the tree used in encoding, a tree may be generated, and the point cloud data may be decoded in the same manner. A geometry information predictor may generate a predictor for the current geometry information in the same manner as in the encoder. The point cloud data may be reconstructed by adding the residual and the predicted value. A geometry information transform inverse quantization processor may inversely quantize and reconstruct the geometry information quantized by the encoder. A coordinate inverse transformer may inversely transform the coordinates transformed by the encoder to reconstruct geometry information. A geometry information decoder may reconstruct a geometry contained in the bitstream. In order to deliver geometry information required for decoding of attribute information, the geometry information decoder may reconstruct the geometry information and transmit the reconstructed value to an attribute information decoder.

The attribute information decoder may receive the attribute information bitstream (see FIG. 20). An attribute residual information entropy decoder may decode the attribute information based on the entropy method. The attribute information decoding method may include RAHT, and lift transform, prediction, as in the case of the encoder. The attribute-based grouping configurator may group attribute information based on parameters included in the bitstream, for example, parameters related to grouping status information, grouping type information, grouped information, and the like. The LOD configurator may generate an LOD based on an LOD-related parameter contained in the bitstream, for example, information indicating the minimum number of points included in one LOD. The neighbor point set configurator may generate a neighbor point candidate set for prediction, like the encoder. The attribute information predictor may predict a current point, like the encoder. The residual attribute information inverse quantization processor may inversely quantize the attribute information as quantized by the encoder. The color inverse transform processor may inversely transform the color as the color is transformed by the encoder. The attribute information decoder may reconstruct attribute information from the attribute information bitstream. Based on the geometry information and/or the attribute information, the method/device according to the embodiments may render the point cloud data.

The decoding operation of the reception device of FIG. 19 follows the description of the drawings given above.

FIG. 20 illustrates a bitstream including point cloud data and/or parameters according to embodiments.

To add/carry out embodiments, related information may be signaled. The signaling information according to the embodiments may be used at the transmitting end or the receiving end. The encoded point cloud may be configured as described below. A point cloud data encoder that performs geometry encoding and/or attribute encoding may generate an encoded point cloud (or a bitstream containing the point cloud). In addition, signaling information related to the point cloud data may be generated and processed by a metadata processor of the point cloud data transmission device and included in the point cloud as described below.

Each abbreviation has the following meaning. Each abbreviation may be referred to by another term within the scope of the equivalent meaning. SPS: Sequence Parameter Set; GPS: Geometry Parameter Set; APS: Attribute Parameter Set; TPS: Tile Parameter Set; Geom: Geometry bitstream = geometry slice header + geometry slice data; Attr: Attribute bitstream = attribute blick header + attribute brick data.

The method/device according to the embodiments may add related information for a similar attribute grouping function for a sequence to the SPS or the APS in the attribute information encoding/decoding process.

When there are tiles or slices having different attribute characteristics in the same sequence, the related information for the similar attribute grouping function for the sequence may be added to the TPS or the Attr for each slice.

Tiles or slices are provided to allow the point cloud to be partitioned into regions for processing.

When the point cloud data is partitioned into regions, an option for generating different sets of neighbor points for the respective regions may be configured to provide a selection method exhibiting low complexity and low reliability of results or a selection method exhibiting high complexity and high reliability. The option may be configured differently according to the capacity of the receiver. When the point cloud data is partitioned into regions, the attribute characteristics of a specific region may be different from the attribute characteristics of the sequence. Therefore, when the point cloud is divided into tiles, a different maximum range of neighbor points may be applied to each tile. When the point cloud is divided into slices, a different maximum range of neighbor points may be applied to each slice.

The point cloud data transmission method/device according to the embodiments (i.e., the transmission device 10000, point cloud video encoder 10002, and transmitter 10003 of FIG. 1, the acquisition 20000-encoding 20001-transmission 20002 of FIG. 2, the encoder of FIG. 4, the transmission device of FIG. 12, the device of FIG. 14, the encoder of FIG. 18, the transmission method of FIG. 25, etc.) may encode the point cloud data, generate a related parameter, and generate and transmit a bitstream as shown in FIG. 20.

The point cloud data reception method/device according to the embodiments (i.e., the reception device 10004, receiver 10005, and point cloud video decoder 10006 of FIG. 1, the transmission 20002-decoding 20003-renderign 20004 of FIG. 2, the decoder in FIGS. 10 and 11, the reception device of FIG. 13, the device of FIG. 14, the decoder of FIG. 19, the reception method of FIG. 26, etc.) may receive the bitstream of FIG. 20, and decode point cloud data based on the parameter.

A bitstream according to embodiments may include an SPS, a GPS, and an APS. Because the point cloud data may include one or more attributes, one or more APSs may be included. The TPS may include information about a bounding box related to one or more tiles. The information about the bounding box may include bounding box position coordinates, width, height, and depth. The unit forming the basis of encoding/decoding of the point cloud data may be a slice. A slice according to embodiments may be a data unit. A bitstream may contain one or more slices (data units). The slice unit may include a slice header and slice data. The slice header may contain signaling information about the geometry included in the slice. For example, it may contain a parameter set ID, a tile ID, a slice ID, a geometry bounding box position, a geometry point number, and the like. Hereinafter, parameters will be described with reference to each drawing.

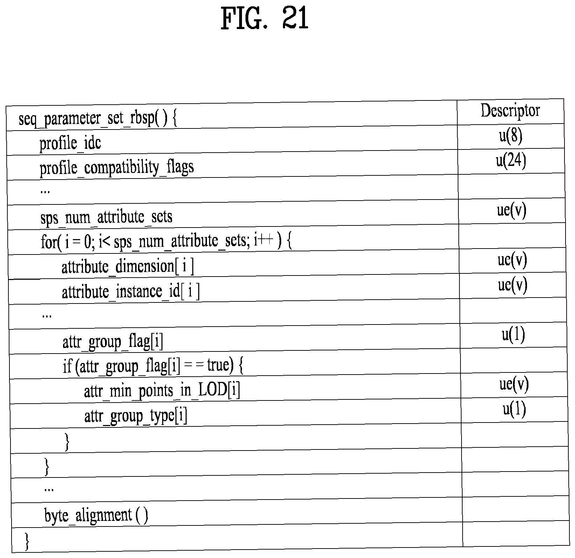

FIG. 21 shows a syntax of a sequence parameter set according to embodiments.

Related information for a similar attribute grouping function in the attribute information encoding/decoding process may be added to a sequence parameter set. The support of the neighbor point configuration function may be efficiently signaled. The name of the signaling information may be understood within the scope of the meaning and function of the signaling information.

attr_group flag[i]: may indicate whether to use attribute grouping in attribute compression of a sequence.

attr_min_points_in_LOD[i]: may indicate the minimum number of points in attribute grouping for generating LOD in attribute compression of a sequence.

attr_group_type[i]: may indicate the attribute grouping method in attribute compression of a sequence. For example, it may be signaled as 0 = Material ID-based grouping, 1 = Similar attribute-based grouping in an octree structure, or the like. Information corresponding to each integer value may be changed.

profile_idc indicates a profile which the bitstream conforms to.

profile_compatibility_flags equal to 1 indicates that the bitstream conforms to the profile indicated by profile_idc equal to j..

sps_num_attribute_sets indicates the number of coded attributes in the bitstream. The value of sps_num_attribute_sets may be in the range of 0 to 63.

attribute_dimension[i] indicates the number of components of the i-th attribute.

attribute_instance_id[i] indicates the instance ID for the i-th attribute.

The SPS according to embodiments may further include the following parameters.

simple_profile_compliant indicates whether the bitstream conforms to a simple profile (when equal to 1) or not (when equal to 0).

Dense_profile_compliant indicates whether the bitstream conforms to a dense profile (when equal to 1) or not (when equal to 0).

predictive_profile_compliant indicates whether the bitstream conforms to a predictive profile (when equal to 1) or not (when equal to 0).

main_profile_compliant indicates whether the bitstream conforms to the main profile (when equal to 1) or not (when equal to 0).

reserved_profile_18bits is equal to 0 in bitstreams conforming to this version of this document. Other values for reserved_profile_18bits are reserved for future use by ISO/IEC.

slice_reordering_constraint indicates whether the bitstream is sensitive (when equal to 1) or not (when equal to 0) to the reordering or removal of slices within the coded point cloud frame. If slices are reordered or removed when slice_reordering_constraint is equal to 1, the resulting bitstream may not be fully decoded.

unique_point_positions_constraint equal to 1 indicates that every point should have a unique position in each coded point cloud frame. unique_point_positions_constraint equal to 0 indicates that two or more points may have the same position in a coded point cloud frame.

Even when points in each slice have unique positions, points in different slices in the same frame may match each other. In this case, unique_point_positions_constraint is set to 0.

When unique_point_positions_constraint is equal to 1, points at the same position in the same frame are prohibited, even if they have different frame index/number attribute values.

level_idc indicates the level to which the bitstream conforms as specified in Annex A. The bitstream shall not contain any value of level_idc other than the values specified in Annex A. Other values of level_idc are reserved for future use by ISO/IEC.

sps_seq_parameter set_id identifies the SPS for reference by other DUs. sps_seq_parameter_set_id shall be 0 in bitstreams that conform to this version of this document. Other values of sps_seq_parameter_set_id are reserved for future use by ISO/IEC.

frame_ctr_lsb_bits specifies the length of the syntax element frame_ctr_lsb in bits.

slice tag_bits specifies the length of the syntax element slice_tag in bits.

bypass_stream_enabled specifies whether a bypass bin for an arithmetic-coded syntax element is delivered in a separate data stream. When bypass_stream_enabled is equal to 1, the two data streams are multiplexed using a fixed-length chunk sequence (11.3). When bypass_stream_enabled is equal to 0, the bypass bin forms part of the arithmetic-coded bitstream.

entropy_continuation enabled indicates whether the entropy syntax analysis of the DU can rely on the final entropy syntax state of the DU in the previous slice (when equal to 1) or not (when equal to 0). It is a requirement of bitstream conformance that entropy_continuation enabled be 0 when slice_reordering_constraint is 0.

sps_extension_present indicates whether the syntax element sps_extension_data is present in the SPS syntax structure (when equal to 1) or not (when equal to 0). sps_extension_present is 0 in bitstreams that conform to this version of this document. The value of 1 for sps_extension_present is reserved for future use by ISO/IEC.

sps_extension_data may have any value. Its presence and value do not affect the decoder conformance to profiles specified in this version of this document.

seq_origin_bits indicates the length of each seq_origin_xyz syntax element, in bits, excluding the sign bit.

seq origin_>cyz[$k$] and seq origin_log2 scale together indicate the XYZ origin of the sequence and coding coordinates per sequence coordinate system unit from the application-specific coordinate origin. When seq_origin_bits is 0, seq origin_>cyz[$k$] and seq origin_log2_scale shall be inferred to be 0. The $k$-th XYZ component of the origin is specified by the expression SeqOrigin[$k$].

seq_bbox_size_bits indicates the length of each syntax element seq_bbox_size_minus1_xyz in bits.

seq_bbox_size_minus1_xyz[$k$] plus 1 indicates the $k$-th XYZ component of the coded volume dimension in the sequence coordinate system. When seq_bbox_size_bits is 0, no coded volume dimension is specified.

seq_unit_numerator_minus1, seq_unit_denominator_minus1, and seq_unit_is_metres together indicate the length represented by the unit vector of the sequence coordinate system.

seq_unit_is_metres equal to 1 indicates the length of the sequence unit vector.

seq_unit_is_metres equal to 0 indicates that the sequence unit vector has a length relative to the following application-specific coordinate system unit vector length AppUnit.

seq_coded_scale exponent, seq_coded_scale_mantissa_bits, and seq coded scale_mantissa together indicate the scale factor that converts the coded coordinate system to the sequence coordinate system. The scale factor is indicated by a syntax element as a normalized binary floating point value greater than or equal to 1. seq_coded scale_mantisssa_bits indicates the length of the syntax element seq coded scale_mantissa in bits. The scale factor is indicated by the expression SeqCodedScale.

geom_axis_order indicates the correspondence between the XYZ axes and the STV axes of the coded point cloud.

num_attributes indicates the number of attributes listed by the SPS attribute list.

AttrDim, AttrBitDepth, and AttrMaxVal indicate the number of components, bit depth, and maximum value of the attribute identified by the variable AttrIdx, respectively.

$$AttrDim := attr\_components\_minus1[AttrIdx] + 1$$

$$AttrBitDepth := attr\_bitdepth\_minus1[AttrIdx] + 1$$

$$AttrMaxVal := Exp2(AttrBitDepth) - 1$$

_components_minus1[attrIdx] plus 1 specifies the number of components of the identified attribute.

Attributes with three or more components may only be coded with raw attribute data (attr_coding_type = 3).

attr_instance_id value may be used to distinguish between attributes with the same attribute label. For example, a point cloud may have multiple color attributes sampled from different viewpoints. In this case, the application may use attr_instance_id to distinguish between the viewpoints.

attr_bitdepth_minus1[attrIdx] plus 1 specifies the bit depth of all components of the identified attribute.

attr_label_known[attrIdx], attr_label[attrIdx], and attr_label_oid[attrIdx] together identify the type of data carried by the identified attribute. attr_label_known[attrIdx] specifies whether the attribute is an attribute specified in this document by the value of attr_label[attrIdx] (when equal to 0) or an externally specified attribute identified by the object identifier attr_label oid[attrIdx] (when equal to 0).

There is an attribute type identified by attr_label. It is a requirement of bitstream conformance that the attribute identified by attr_label should have components as many as specified to be valid. The unspecified value of attr_label is reserved for future use in ISO/IEC. The decoder should decode the attribute with the reserved value of attr label.

The attribute type identified by attr_label_oid is not specified in this document.

attr_property_cnt indicates the number of attribute_property syntax structures in the SPS for the property.

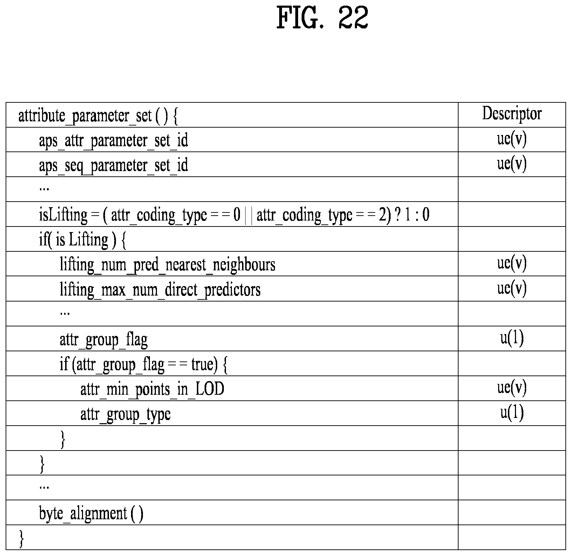

FIG. 22 shows a syntax of an attribute parameter set according to embodiments.

Related information for a similar attribute grouping function in the attribute information encoding/decoding process may be added to an attribute parameter set. The support of the neighbor point configuration function may be efficiently signaled. The name of the signaling information may be understood within the scope of the meaning and function of the signaling information. The attribute parameter set may be referred to as signaling information about the attribute.

attr_group_flag: may indicate whether to use attribute grouping in attribute compression of a sequence.

attr_min_points_in_LOD: may indicate the minimum number of points in attribute grouping for generating LOD in attribute compression of a sequence.

attr_group_type: may indicate the attribute grouping method in attribute compression of a sequence. For example, it may be signaled as 0 = Material ID-based grouping, 1 = Similar attribute-based grouping in an octree structure, or the like. Information corresponding to each integer value may be changed.

aps attr_parameter_set_id indicates an identifier for the APS for reference by other syntax elements. The value of aps attr_parameter set_id may be in the range of 0 to 15.

aps_seq_parameter_set_id specifies the value of sps_seq_parameter_set_id for the active SPS. The value of aps_seq_parameter_set_id may be in the range of 0 to 15.

Lifting_num_pred_nearest_neighbours indicates the maximum number of nearest neighbors to be used for prediction. The value of Lifting_num_pred_nearest_neighbours may be in the range of 1 to xx.

Lifting_max_num_direct_predictors indicates the maximum number of predictors to be used for direct prediction. The value of Lifting_max_num_direct_predictors may be in the range of 0 to lifting_num_pred_nearest_neighbours. The value of the variable MaxNumPredictors used in the decoding process is given as follows: MaxNumPredictors = lift_max_num_direct_predicots + 1.

The APS according to the embodiments may further include the following parameters.

num_attributes indicates the number of attributes listed by the SPS attribute list.

AttrDim, AttrBitDepth, and AttrMaxVal indicate the number of components, bit depth, and maximum value of the attribute identified by the variable AttrIdx, respectively.

$$AttrDim := attr\_components\_minus1[AttrIdx] + 1$$

$$AttrBitDepth := attr\_bitdepth\_minus1[AttrIdx] + 1$$

$$AttrMaxVal := Exp2(AttrBitDepth) - 1$$

_components_minus1[attrIdx] plus 1 specifies the number of components of the identified attribute.

Attributes with three or more components may only be coded with raw attribute data (attr_coding_type = 3).

attr_instance_id value may be used to distinguish between attributes with the same attribute label. For example, a point cloud may have multiple color attributes sampled from different viewpoints. In this case, the application may use attr_instance_id to distinguish between the viewpoints.

attr_bitdepth_minus1[ attrIdx ] plus 1 specifies the bit depth of all components of the identified attribute.

attr_label_known[ attrIdx ], attr_label[ attrIdx ], and attr_label_oid[ attrIdx ] together identify the type of data carried by the identified attribute. attr_label_known[ attrIdx ] specifies whether the attribute is an attribute specified in this document by the value of attr_label[ attrIdx ] (when equal to 0) or an externally specified attribute identified by the object identifier attr_label_oid[ attrIdx ] (when equal to 0).

The types of attributes identified by attr_label are specified in Table 9. It is a requirement of bitstream conformance that the attribute identified by attr_label should have components only as many as specified as valid. Unspecified values of attr_label are reserved for future use by ISO/IEC. The decoder should decode the attribute with a reserved value of attr_label.

The attribute type identified by attr_label_oid is not specified in this document.

attr_property_cnt indicates the number of attribute_property syntax structures in the SPS for the property.

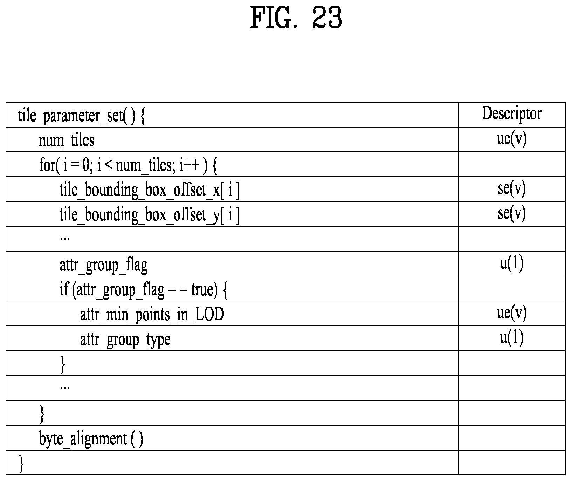

FIG. 23 shows a syntax of a tile parameter set according to embodiments.

Related information for a similar attribute grouping function in the attribute information encoding/decoding process may be added to a tile parameter set. The support of the neighbor point configuration function may be efficiently signaled. The name of the signaling information may be understood within the scope of the meaning and function of the signaling information.

attr_group_flag: indicates whether to use attribute grouping in attribute compression of a tile.

attr_min_points_in_LOD: indicates the minimum number of points in attribute grouping for generating LOD in attribute compression of a tile.

attr_group_type: indicates the attribute grouping method in attribute compression of a tile. For example, it may be signaled as 0 = Material ID-based grouping, 1 = Similar attribute-based grouping in an octree structure, or the like. Each integer value may be changed.

num_tiles indicates the number of tiles signaled for the bitstream. When not present, num_tiles is inferred to be 0.

tile_bounding_box_offset_x[i] indicates the x offset of the i-th tile in Cartesian coordinates. When not present, the value of tile_bounding_box offset x[0] is inferred to be sps_bounding_box_offset_x.

tile_bounding_box_offset_y[i] indicates the y offset of the i-th tile in the Cartesian coordinates. When not present, the value of tile_bounding_box_offset_y[0] is inferred to be sps_bounding_box_offset_y.

tile_bounding_box_offset_z[i] indicates the z offset of the i-th tile in the Cartesian coordinates. When not present, the value of tile_bounding_box offset z[0] is inferred to be sps_bounding_box offset z.

The tile parameter set according to embodiments may further include the following parameters. The tile parameter set may be referred to as a tile inventory.

ti seq_parameter set_id indicates an active SPS with sps seq_parameter_set_id.

ti_frame_ctr_lsb_bits indicates the length of the syntax element ti_frame_ctr_lsb in bits. The ti_frame_ctr_lsb_bits may be the same as the frame_ctr_lsb_bits of the active SPS.

ti_frame_ctr_lsb may be the ti_frame_ctr_lsb_bits LSB of FrameCtr for the next coded point cloud frame.

tile_cnt indicates the number of tiles listed by the tile inventory.

tile_id_bits indicates the length of each syntax element tile_id in bits. tile_id_bits equal to 0 indicates that the tile should be identified by index tileIdx.

tile_origin_bits_minus1 plus 1 indicates the length of each syntax element tile_origin_xyz in bits, excluding the sign bit.

tile_size_bits_minus1 plus 1 indicates the length of each syntax element tile_size_minus1_xyz in bits.

tile_id[tileIdx] indicates the identifier of the tileIdx-th tile in the tile inventory. When tile_id_bits is 0, the value of tile_id[tileIdx] is inferred to be tileIdx. Every value of tile_id may be unique in the tile inventory.

tile origin_>cyz[tileId][k] and tile_size_minus1_xyz[tileId][$k$] indicate the bounding box in the sequence coordinate system containing the slice identified by the slice_tag equal to tileId.

tile_origin_xyz[tileId][$k$]) indicate the k-th XYZ coordinate of the bottom corner of the tile bounding box with respect to the tile inventory origin.

tile_size_minus1_xyz[tileId][$k$] plus 1 indicates the k-th XYZ dimension of the tile bounding box.

ti_origin_bits_minus1 plus 1 indicates the length of each syntax element ti_origin_xyz in bits, excluding the sign bit.

ti_origin_xyz[$k$] and ti_origin_log2 scale together indicate the XYZ origin of the sequence coordinate system specified by seq_origin_xyz[k] and seq_origin_log2 scale. The values of ti_origin_xyz[$k$] and ti origin_log2_scale may be the same as seq_origin_xyz[k] and seq_origin_log2_scale, respectively.

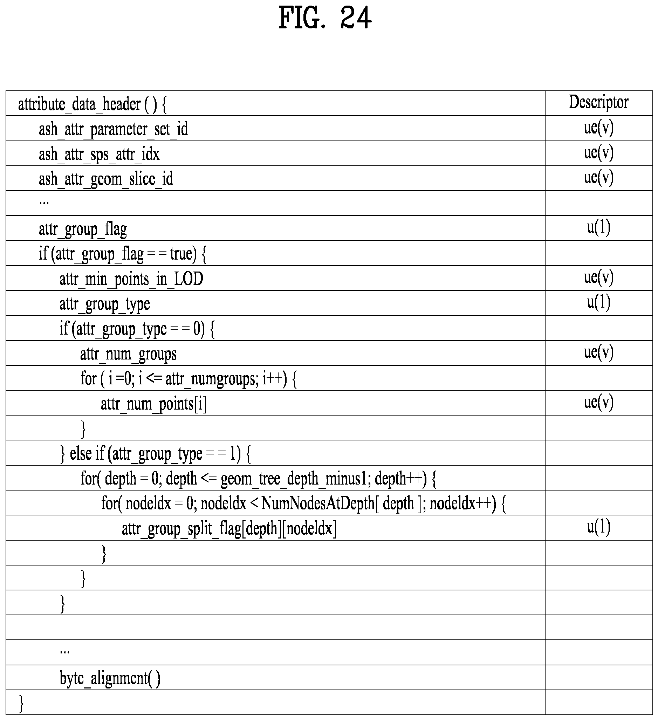

FIG. 24 shows a syntax of an attribute data header according to embodiments.

The header of the data unit (or slice) carrying the attribute contained in the bitstream of FIG. 20 may contain the following information.

attr_group_flag: indicates whether to use attribute grouping in attribute compression of a slice.

attr_min_points_in_LOD: may indicate the minimum number of points in attribute grouping for generating LOD in attribute compression of a slice.

attr_group_type: indicates the attribute grouping method in attribute compression of a slice. For example, it may be signaled as 0 = Material ID-based grouping, 1 = Similar attribute-based grouping in an octree structure, or the like. Each integer value may be changed.

attr_num_groups: indicates the number of generated groups when grouping is performed according to a material ID in compressing an attribute of a slice.

attr_num_points: indicates the number of points for each group when grouping is performed according to a material ID in compressing an attribute of a slice.

attr_group split flag: indicates whether grouping is performed by indicating whether splitting is performed for each octree node when grouping is performed based on each similar attribute in an octree structure in compressing an attribute of a slice.

abh_attr_parameter_set_id specifies the value of aps attr_parameter set_id of the active APS.

abh_attr_sps_attr_idx specifies the attribute set in the active SPS. The value of abh_attr_sps_attr_idx may be in the range of 0 to sps_num_attribute_sets in the active SPS.

ash attr_geom_slice_id specifies the value of gsh_slice_id of the active geometry slice header.

When all attribute data units (ADUs) are started, the variable AttrIdx is set to adu_sps_attr_idx: AttrIdx = adu_sps_attr_idx.

The attribute coded by the ADU may have up to three components if attr_coding_type is not equal to 3.

adu_slice_id indicates the value of the preceding GDU slice_id.

FIG. 25 illustrates a method of transmitting point cloud data according to embodiments.

The point cloud data transmission method according to the embodiments may include encoding point cloud data (S2500).

The point cloud data transmission method according to the embodiments may further include transmitting a bitstream containing the point cloud data (S2501).

The point cloud data transmission method according to the embodiments conforms to the description of the transmission device 10000, point cloud video encoder 10002, and transmitter 10003 of FIG. 1, the acquisition 20000-encoding 20001-transmission 20002 of FIG. 2, the encoder of FIG. 4, the transmission device of FIG. 12, the device of FIG. 14, the encoder of FIG. 18, and the like.

FIG. 26 illustrates a method of receiving point cloud data according to embodiments.

The point cloud data reception method according to the embodiments may include receiving a bitstream containing point cloud data (S2600).

The point cloud data reception method according to the embodiments may further include decoding the point cloud data.

The point cloud data reception method/device according to the embodiments conforms to the description of the reception device 10004, receiver 10005, and point cloud video decoder 10006 of FIG. 1, the transmission 20002-decoding 20003-renderign 20004 of FIG. 2, the decoder in FIGS. 10 and 11, the reception device of FIG. 13, the device of FIG. 14, the decoder of FIG. 19, and the like.

A point cloud data transmission method according to embodiments may include encoding point cloud data, and transmitting a bitstream containing the point cloud data.

Referring to FIG. 15, regarding grouping according to a material ID, the encoding of the point cloud data may include grouping the point cloud data based on the material ID, wherein the point cloud data may include attribute data including the material ID. The attribute data may include a color. Attribute data of point cloud data having the same material ID may be similar to each other. The regions of a tile having a first material ID as attribute data may have the same or similar attribute (e.g., color, reflectance, material, etc.) as attribute data.

Referring to FIG. 16, regarding grouping based on similar attributes, the encoding of the point cloud data may include encoding geometry data of the point cloud data based on a tree, and grouping attribute data of the point cloud data based on the tree, wherein the grouping of the attribute data may include groups points having similar attribute data among one or more points included in a node included in the tree, and, based on a difference between a median value, a minimum value, and a maximum value of attribute data of the one or more points being less than a threshold, generating a group having the one or more points.

Referring to FIG. 16, the encoding of the point cloud data may further include generating a level of detail (LOD) for the grouped attribute data, wherein points included in the LOD may be sorted based on a Morton code.

Referring to FIG. 16, regarding the LOD generation for each group, the encoding of the point cloud data may further include generating a neighbor point set of the point cloud data based on the LOD, wherein the neighbor point set may be searched for based on a search range from points included in LODs having an index less than or equal to an index of an LOD having the point cloud data.

Referring to FIG. 20, regarding the parameter, the bitstream may contain information about grouping of similar attributes.

The point cloud data transmission method may be carried out by a transmission device. The transmission device may be referred to as an encoder. The transmission device may be referred to as a device including a memory and/or a processor. The transmission device may include an encoder configured to encode point cloud data, and a transmitter configured to transmit a bitstream containing the point cloud data.

A reception method may perform a corresponding process and an inverse process to the transmission method. The point cloud data reception method may include receiving a bitstream containing point cloud data, and decoding the point cloud data.

The decoding of the point cloud data may include grouping the point cloud data based on a material ID, wherein the point cloud data may include attribute data including the material ID. The attribute data may include a color, wherein attribute data of point cloud data having the same material ID may be similar to each other.

The decoding of the point cloud data may include decoding geometry data of the point cloud data based on a tree, and grouping attribute data of the point cloud data based on the tree, wherein the grouping of the attribute data may include grouping points having similar attribute data among one or more points included in a node included in the tree, and, based on a difference between a median value, a minimum value, and a maximum value of attribute data of the one or more points being less than a threshold, generating a group having the one or more points.

The decoding of the point cloud data may further include generating a level of detail (LOD) for the grouped attribute data, wherein points included in the LOD may be sorted based on a Morton code.

The decoding of the point cloud data may further include generating a neighbor point set of the point cloud data based on the LOD, wherein the neighbor point set may be searched for based on a search range from points included in LODs having an index less than or equal to an index of an LOD having the point cloud data.

The bitstream may contain information about grouping of similar attributes.

The point cloud data reception method may be performed by a reception device. The reception device may be referred to as a decoder. The reception device may be referred to as a device including a memory and/or a processor. The reception device may include a receiver configured to receive a bitstream containing point cloud data, and a decoder configured to decode the point cloud data.

The decoder configured to decode the point cloud data may group the point cloud data based on a material ID, wherein the point cloud data may include attribute data including the material ID. The attribute data may include a color, wherein attribute data of point cloud data having the same material ID may be similar to each other.

The above-described embodiments provide a method capable of limiting points that may be selected as a set of neighbor points used for prediction in consideration of attribute association between points of content in a G-PCC attribute encoding/decoding process.

When the content contains one object that has continuity/similarity of color and is captured at high density, and the captured region is a small area, there may be content having points whose attributes are highly associated with each other even though the distance from a neighbor point is slightly long. This may affect configuring a neighbor point set by grouping considering attribute characteristics of the content, which may affect the attribute compression efficiency.

The proposed method of attribute compression through grouping of points with similar attributes may remove information that disturbs prediction, rather than being helpful when the association between the attributes is low due to the attribute characteristic of the content. Accordingly, it may increase the average value of the prediction so as not to increase the residual from the attribute value of the points, and may not assign a weight to unimportant information. As a result, the size of the attribute bitstream may be reduced and the accuracy of the PSNR accuracy may be increased.

Accordingly, the present embodiments may increase the attribute compression efficiency based on the content attribute characteristics considered in the encoder/decoder of the geometry-based point cloud compression (G-PCC) for compression of 3D point cloud data.

With the methods/devices (the transmission method/device and/or reception method/device) according to the embodiments, various types of point cloud data may be efficiently encoded/decoded by grouping based on similar attributes to effectively select a neighbor point set used for attribute compression in consideration of attribute characteristics of content, and generating an LOD based on the grouped similar attributes.

Regarding the point cloud data encoder (e.g., the neighbor point set generator) according to the above-described embodiments, due to the similarity attribute-based grouping method, the method of configuring LODs and neighbor point set for each group, and/or the signaling method for the same, the method/device for transmitting or receiving point cloud data according to embodiments may increase the efficiency of attribute compression/decompression with an optimal neighbor point set.

The method of attribute compression through grouping of points with similar attributes may remove information that disturbs prediction, rather than being helpful when the association between the attributes is low due to the attribute characteristic of the content. Accordingly, it may increase the average value of the prediction so as not to increase the residual from the attribute value of the points, and may not assign a weight to unimportant information. As a result, the size of the attribute bitstream may be reduced and the accuracy of the PSNR accuracy may be increased.

In addition to the method of selecting neighbor points to increase attribute compression efficiency, e.g., by increasing the number of neighbor point sets from three to six, or by selecting better-positioned points from six neighbor point set candidates, embodiments may further set a range of neighbor point selection through similar attribute-based grouping prior to selecting a neighbor point set, thereby increasing the probability that neighbor points have similar attributes to each other, which may result in better compression efficiency performance.

Further, for example, in addition to the method of separating patches by material ID in the process of generating patches, embodiments may further include configuring grouping by material ID and/or octree nodes for attribute compression, configuring LODs per group and performing neighbor node search, thereby increasing the efficiency of compression based on similar attributes.

Further, in addition to simply slicing point cloud data containing multiple slices for scalability, embodiments may group attribute data based on a material ID and/or an octree node.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related details have been described in the best mode for carrying out the embodiments.

[Industrial Applicability]

As described above, the embodiments are fully or partially applicable to a point cloud data transmission/reception device and system.

Those skilled in the art may change or modify the embodiments in various ways within the scope of the embodiments.

Embodiments may include variations/modifications within the scope of the claims and their equivalents.

**Claims**

**1.** A method of transmitting point cloud data, the method comprising:

encoding point cloud data; and
transmitting a bitstream containing the point cloud data.

**2.** The method of claim 1, wherein the encoding of the point cloud data comprises:

grouping the point cloud data based on a material ID,
wherein the point cloud data comprises attribute data comprising the material ID,
wherein the attribute data comprises a color,

wherein attribute data of point cloud data having the same material ID are similar to each other.

3. The method of claim 1, wherein the encoding of the point cloud data comprises:

encoding geometry data of the point cloud data based on a tree; and
grouping attribute data of the point cloud data based on the tree,
wherein the grouping of the attribute data comprises:

grouping points having similar attribute data among one or more points included in a node included in the tree; and
based on a difference between a median value, a minimum value, and a maximum value of attribute data of the one or more points being less than a threshold, generating a group having the one or more points.

4. The method of claim 3, wherein the encoding of the point cloud data further comprises:

generating a level of detail (LOD) for the grouped attribute data,
wherein points included in the LOD are sorted based on a Morton code.

5. The method of claim 4, wherein the encoding of the point cloud data further comprises:

generating a neighbor point set of the point cloud data based on the LOD,
wherein the neighbor point set is searched for based on a search range from points included in LODs having an index less than or equal to an index of an LOD having the point cloud data.

6. The method of claim 1, wherein the bitstream contains information about grouping of similar attributes.

7. A device for transmitting point cloud data, the device comprising:

an encoder configured to encode point cloud data; and
a transmitter configured to transmit a bitstream containing the point cloud data.

8. A method of receiving point cloud data, the method comprising:

receiving a bitstream containing point cloud data; and
decoding the point cloud data.

9. The method of claim 8, wherein the decoding of the point cloud data comprises:

grouping the point cloud data based on a material ID,
wherein the point cloud data comprises attribute data comprising the material ID,
wherein the attribute data comprises a color,
wherein attribute data of point cloud data having the same material ID are similar to each other.

10. The method of claim 8, wherein the decoding of the point cloud data comprises:

decoding geometry data of the point cloud data based on a tree; and
grouping attribute data of the point cloud data based on the tree,
wherein the grouping of the attribute data comprises:

grouping points having similar attribute data among one or more points included in a node included in the tree; and
based on a difference between a median value, a minimum value, and a maximum value of attribute data of the one or more points being less than a threshold, generating a group having the one or more points.

11. The method of claim 10, wherein the decoding of the point cloud data further comprises:

generating a level of detail (LOD) for the grouped attribute data,
wherein points included in the LOD are sorted based on a Morton code.

**12.** The method of claim 11, wherein the decoding of the point cloud data further comprises:

generating a neighbor point set of the point cloud data based on the LOD,
wherein the neighbor point set is searched for based on a search range from points included in LODs having an index less than or equal to an index of an LOD having the point cloud data.

**13.** The method of claim 8, wherein the bitstream contains information about grouping of similar attributes.

**14.** A device for receiving point cloud data, the device comprising:

a receiver configured to receive a bitstream containing point cloud data; and
a decoder configured to decode the point cloud data.

**15.** The device of claim 14, wherein the decoder configured to decode the point cloud data groups the point cloud data based on a material ID,

wherein the point cloud data comprises attribute data comprising the material ID,
wherein the attribute data comprises a color,
wherein attribute data of point cloud data having the same material ID are similar to each other.

# FIG. 1

# FIG. 2

EP 4 429 250 A1

18000
Acquisition

Ply file
-geometry
-attribute

18001
Encoding

Encoded
-geometry
-attribute bitstream

18002
Transmission

18003
Decoding

Decoded
-geometry
-attribute

18004
Rendering

Head orientation information,
viewport information

18005
Feedback

Head orientation information,
viewport information

FIG. 3

# FIG. 4

positions                                          attributes

38000 — Transform coordinates          Transform colors — 38006

38001 — Quantize and remove points (voxelize)          Transfer attributes — 38007

38002 — Analyze octree          Reconstruct geometry          RAHT          Gnnerate LOD — 38009

38008

38003 — Analyze surface approximation          Lifting — 40010

38005          Quantize coefficients — 40011

38004 — Arithmetic encode          Arithmetic encode — 40012

geometry bitstream                    atribute bitstream

# FIG. 5

# FIG. 6

# FIG. 7

$$1 + 2 + 4 + 8 = 15$$

# FIG. 8

Level of details

EP 4 429 250 A1

# FIG. 9

P0  P1  P4  P3

P6  P7

P9

P5  P8  P2

| Original order | P0, P1, P2, P3, P4, P5, P6, P7, P8, P9 |
|---|---|

| LOD-based order | P0, P5, P4, P2 | P1, P6, P3 | P9, P8, P7 |
|---|---|---|---|

LOD0

LOD1

LOD2

42

# FIG. 10

# FIG. 11

geomerty
bitstream

attributes
birsrteam

11000 — Arithmerix decode

11005 — Arithmerix decode

11001 — Synthesize
octree

11006 — Inverse quantize

11002 — synthesize surface
approximation

11007

11003 — Reconstruct
geometry

RAHT

11008 — Gnnerate
LOD

11009 — Inverse
lifring

11004 — Inverse transform
coordinates

11010 — Inverse transform colors

position

attributes

# FIG. 12

12000 — Data input unit

12007

Position values of points

Set value, etc.

Attribute values of points

12001 — Quantization processor

Metadata processor

Color transform processor — 12008

12002 — Voxelization processor

Attribute transform processor — 12009

12003 — Octree occupancy code generator

Prediction/lifting/RAHT transform processor — 12010

12004 — Surface model processor

Arithmetic coder — 12011

12005 — Intra/inter-coding processor

12006 — Arithmetic coder

Sharing reconstructed position values

12012 — Transmission processor

Transmission

# FIG. 13

13000 — Receiver

13001 — Reception processor

13006

Geometry bitstream

Attribute bitstream

Set value, etc.

13002 — Arithmetic decoder

Metadata parser

Arithmetic decoder — 13007

13003 — Occupancy code-based octree reconstruction processor

Inverse quantization processor — 13008

13004 — Surface model processor (triangle reconstruction, up-sampling, voxelization)

Prediction/lifting/RAHT inverse transform processor — 13009

13005 — Inverse quantization processor

Color inverse transform processor — 13010

Sharing reconstructed position values

Renderer — 13011

# FIG. 14

# FIG. 15

# FIG. 16

# FIG. 17

Indexes List ($LOD_l$)

Sorted by MC in the
direction of →

Retained List ($LOD_0$~$LOD_{l-1}$)    -searchRange(e.g. - 128 index)    +searchRange(e.g. adjustable to 128 index - conf)

Pi = Point having
MC value closest to Pxmc

① Searching for points
having MC value greater than
PxMC in the direction of →

② Registering X (e.g., 3) points closest
to Px among the points in the range as
neighbor point set of Px

FIG. 18

Data input unit (geometry, attributes, parameters) → Coordinate transformer → Geometry information transform/quantization processor → Spatial partitioner

Geometry information encoder

Voxelization processor → Octree generator → Geometry information intra-predictor → Geometry information entropy encoder → Geometry information bitstream

Reconstructed geometry information

Attribute information encoder

color transform processor

Is redundant point merged? — YES → Recolorer

NO → RAHT? — NO, Prediction, Lift Transform → Attribute-based grouping configurator

YES → Grouping status, Grouping type ... threshold

Minimum number of points belonging to one LOD

Grouping status
Grouping type
Grouped information

Minimum number of points belonging to one LOD

Attribute-based grouping configurator → LOD configurator → Neighbor point set configurator → Attribute information predictor → Residual attribute information quantization processor → Attribute information entropy encoder → Attribute information bitstream

# FIG. 19

Geometry information bitstream

geometry information decoder

Geometry information entropy decoder

Octree reconstructor

Geometry position predictor

Geometry information transform/ inverse quantization processor

Reconstructed geometry information

Coordinate inverse transformer

Geometry information

Geometry information decoder

Attribute information decoder

Attribute residual information entropy decoder

RAHT?

NO, Prediction, Lift Transform

YES

Grouping status Grouping type threashold

Minimum number of points belonging to one LOD

Attribute-based grouping configurator

LOD configurator

Neighbor point set configurator

Attribute information predictor

Residual attribute information inverse quantization processor

Color inverse transform processor

Attribute information

EP 4 429 250 A1

# FIG. 20

slice 0                    slice n

SPS | GPS | APS$_0$ | APS$_1$ | TPS | Geom$_0^0$ | Attr$_0^0$ | Attr$_1^0$ | ... | Geom$_0^n$ | Attr$_0^n$ | Attr$_1^n$ |

Tile(0).tile_bounding_box_xyz0;
Tile(0).tile_bounding_box_whd;
...
Tile(n).tile_bounding_box_whd;
Tile(n).tile_bounding_box_whd;

| Geom_slice_header | Geom_slice_data |

geom_geom_parameter_set_id;
geom_tile_id;
geom_slice_id;
geomBoxOrigin;
geom_box_log2_scale;
geom_max_node_size_log2;
geom_num_points

# FIG. 21

| seq_parameter_set_rbsp( ) { | Descriptor |
|---|---|
| profile_idc | u(8) |
| profile_compatibility_flags | u(24) |
| ... | |
| sps_num_attribute_sets | ue(v) |
| for( i = 0; i< sps_num_attribute_sets; i++ ) { | |
| attribute_dimension[ i ] | ue(v) |
| attribute_instance_id[ i ] | ue(v) |
| ... | |
| attr_group_flag[i] | u(1) |
| if (attr_group_flag[i] = = true) { | |
| attr_min_points_in_LOD[i] | ue(v) |
| attr_group_type[i] | u(1) |
| } | |
| } | |
| ... | |
| byte_alignment ( ) | |
| } | |

# FIG. 22

| attribute_parameter_set ( ) { | Descriptor |
|---|---|
| aps_attr_parameter_set_id | ue(v) |
| aps_seq_parameter_set_id | ue(v) |
| ... | |
| isLifting = ( attr_coding_type == 0 \|\| attr_coding_type == 2) ? 1 : 0 | |
| if( is Lifting ) { | |
| lifting_num_pred_nearest_neighbours | ue(v) |
| lifting_max_num_direct_predictors | ue(v) |
| ... | |
| attr_group_flag | u(1) |
| if (attr_group_flag == true) { | |
| attr_min_points_in_LOD | ue(v) |
| attr_group_type | u(1) |
| } | |
| } | |
| ... | |
| byte_alignment ( ) | |
| } | |

# FIG. 23

| tile_parameter_set( ) { | Descriptor |
|---|---|
| num_tiles | ue(v) |
| for( i = 0; i < num_tiles; i++ ) { | |
| tile_bounding_box_offset_x[ i ] | se(v) |
| tile_bounding_box_offset_y[ i ] | se(v) |
| ... | |
| attr_group_flag | u(1) |
| if (attr_group_flag = = true) { | |
| attr_min_points_in_LOD | ue(v) |
| attr_group_type | u(1) |
| } | |
| ... | |
| } | |
| byte_alignment ( ) | |
| } | |

# FIG. 24

| attribute_data_header ( ) { | Descriptor |
|---|---|
| ash_attr_parameter_set_id | ue(v) |
| ash_attr_sps_attr_idx | ue(v) |
| ash_attr_geom_slice_id | ue(v) |
| ... | |
| attr_group_flag | u(1) |
| if (attr_group_flag = = true) { | |
| attr_min_points_in_LOD | ue(v) |
| attr_group_type | u(1) |
| if (attr_group_type = = 0) { | |
| attr_num_groups | ue(v) |
| for ( i =0; i <= attr_numgroups; i++) { | |
| attr_num_points[i] | ue(v) |
| } | |
| } else if (attr_group_type = = 1) { | |
| for( depth = 0; depth <= geom_tree_depth_minus1; depth++) { | |
| for( nodeIdx = 0; nodeIdx < NumNodesAtDepth[ depth ]; nodeIdx++) { | |
| attr_group_split_flag[depth][nodeIdx] | u(1) |
| } | |
| } | |
| } | |
| | |
| ... | |
| byte_alignment( ) | |
| } | |

# FIG. 25

| Encode point cloud data | S2500 |

| Transmit bitstream containing point cloud data | S2501 |

# FIG. 26

| Receive bitstream containing point cloud data | ～S2600 |
|---|---|

↓

| Decode point cloud data | ～S2601 |
|---|---|

## INTERNATIONAL SEARCH REPORT

| International application No. |
|---|
| **PCT/KR2022/016952** |

### A. CLASSIFICATION OF SUBJECT MATTER

**H04N 19/597**(2014.01)i; **H04N 19/177**(2014.01)i; **H04N 19/70**(2014.01)i; **H04N 19/96**(2014.01)i; **H04N 19/44**(2014.01)i; **H04N 19/184**(2014.01)i

According to International Patent Classification (IPC) or to both national classification and IPC

### B. FIELDS SEARCHED

Minimum documentation searched (classification system followed by classification symbols)

H04N 19/597(2014.01); G06T 15/10(2006.01); G06T 17/20(2006.01); G06T 7/90(2017.01); G06T 9/00(2006.01); H04N 19/61(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 지오메트리(geometry), 어트리뷰트(attribute), 그룹(group), 머터리얼(material)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2021-182937 A1 (LG ELECTRONICS INC.) 16 September 2021.<br>See paragraph [0102]; claims 1 and 10; and figure 4. | 1,7-8,14<br>2-6,9-13,15 |
| Y | US 2021-0201539 A1 (HUAWEI TECHNOLOGIES CO., LTD.) 01 July 2021 (2021-07-01)<br>See paragraph [0119]; and claim 3. | 2,6,9,13,15 |
| Y | CN 112385236 A (BEIJING XIAOMI MOBILE SOFTWARE CO., LTD. et al.) 19 February 2021 (2021-02-19)<br>See paragraph [0045]; and claim 1. | 3-5,10-12 |
| A | CN 113240786 A (BEIJING QIYI CENTURY SCIENCE & TECHNOLOGY CO., LTD.) 10 August 2021 (2021-08-10)<br>See paragraphs [0004]-[0040]; and claims 1-6. | 1-15 |

[✓] Further documents are listed in the continuation of Box C.　　[✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 February 2023** | **16 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/016952** |

**C.    DOCUMENTS CONSIDERED TO BE RELEVANT**

| Category* | Citation of document, with indication, where appropriate, of the relevant passages | Relevant to claim No. |
|---|---|---|
| A | CN 112785714 A (BEIJING BAIDU NETCOM SCIENCE AND TECHNOLOGY CO., LTD.) 11 May 2021 (2021-05-11)<br>    See paragraphs [0004]-[0010]; and claims 1-8. | 1-15 |

Form PCT/ISA/210 (second sheet) (July 2022)

**INTERNATIONAL SEARCH REPORT**
Information on patent family members

International application No.

**PCT/KR2022/016952**

| Patent document cited in search report | | | Publication date (day/month/year) | Patent family member(s) | | | Publication date (day/month/year) |
|---|---|---|---|---|---|---|---|
| WO | 2021-182937 | A1 | 16 September 2021 | | None | | |
| US | 2021-0201539 | A1 | 01 July 2021 | BR | 112021004798 | A2 | 08 June 2021 |
| | | | | CN | 112690002 | A | 20 April 2021 |
| | | | | CN | 113016184 | A | 22 June 2021 |
| | | | | EP | 3841750 | A1 | 30 June 2021 |
| | | | | EP | 3844963 | A1 | 07 July 2021 |
| | | | | JP | 2021-536204 | A | 23 December 2021 |
| | | | | JP | 2022-500931 | A | 04 January 2022 |
| | | | | JP | 7130853 | B2 | 05 September 2022 |
| | | | | KR | 10-2021-0057143 | A | 20 May 2021 |
| | | | | KR | 10-2021-0057161 | A | 20 May 2021 |
| | | | | SG | 11202102620 | A | 29 April 2021 |
| | | | | US | 2021-0203989 | A1 | 01 July 2021 |
| | | | | WO | 2020-055865 | A1 | 19 March 2020 |
| | | | | WO | 2020-055869 | A1 | 19 March 2020 |
| CN | 112385236 | A | 19 February 2021 | CN | 112385236 | B | 15 July 2022 |
| | | | | EP | 3929873 | A1 | 29 December 2021 |
| | | | | WO | 2021-258374 | A1 | 30 December 2021 |
| CN | 113240786 | A | 10 August 2021 | | None | | |
| CN | 112785714 | A | 11 May 2021 | | None | | |

Form PCT/ISA/210 (patent family annex) (July 2022)